# DEMANDE DE BREVET EUROPEEN

(11) **EP 3 747 593 A1**
(43) Date de publication de la demande: **09.12.2020**
(21) Numéro de dépôt: 20178513.6
(22) Date de dépôt: 05.06.2020
(51) Int. Cl.: B23Q 7/04, B65G 47/90

(54) **DISPOSITIF DE PRÉHENSION INDUSTRIEL**

(30) Priorité: 07.06.2019 FR 1906097
(71) Demandeur: FIVES CINETIC, 70400 Hericourt (FR)
(72) Inventeur: BRYON, Brice, 70400 Hericourt (FR); LESCARMONTIER, Vincent, 70400 Hericourt (FR)
(74) Mandataire: Lavoix

(57) **Abrégé**

Dispositif (1) de préhension comprenant :
- un support (2) muni d'un premier moyen (3) de guidage,
- une bielle (4) rotative montée mobile en rotation sur le support (2), et
- une pluralité de moyens (5, 6) de préhension montés mobiles en rotation sur la bielle (4) rotative,
lesdits moyens (5, 6) de préhension comportant chacun un deuxième moyen de guidage apte à coopérer avec le premier moyen (3) de guidage de sorte que les moyens (5, 6) de préhension se déplacent selon un parcours défini par le premier moyen (3) de guidage.

## Description

### Domaine technique de l'invention

L'invention concerne un dispositif de préhension industriel. De façon plus précise, l'invention a trait aux dispositifs destinés à évacuer une pièce traitée mécaniquement d'une zone de travail et à déposer une seconde pièce en vue d'une opération mécanique sur la zone de travail.

### Arrière-plan technique

Dans l'industrie manufacturière, les pièces sont initialement brutes. Ces pièces brutes subissent ensuite diverses opérations mécaniques successives.

Des pièces brutes sont acheminées sur une zone de travail pour y subir des opérations mécaniques au moyen d'un système de préhension comprenant un dispositif de préhension et un bras robotisé apte à déplacer le dispositif de préhension. Les pièces traitées sont ensuite évacuées par le système de préhension, lorsque les opérations mécaniques sont achevées.

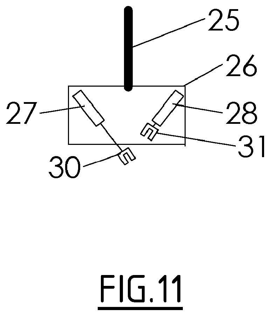

En référence à la figure 11 qui est une représentation schématique d'un système classique de préhension, dans un premier temps, le bras mobile 25 déplace le dispositif 26 de préhension vers un premier posage ou convoyeur où une pièce brute est saisie par ledit dispositif de préhension. Dans un second temps, le bras mobile déplace le dispositif de préhension vers la zone de travail où une pièce traitée est extraite et la pièce brute est déposée. Dans un troisième temps, le bras mobile déplace le dispositif de préhension avec la pièce traitée vers un second posage ou convoyeur où celle-ci est déposée puis évacuée par le second posage ou convoyeur. A nouveau, le bras mobile déplace le dispositif de préhension vers le premier posage ou convoyeur pour y saisir une autre pièce brute.

Le système de préhension a donc trois fonctions :
- une première fonction qui consiste à saisir une pièce brute au voisinage d'un posage ou convoyeur,
- une deuxième fonction qui consiste à saisir une pièce traitée et déposer une pièce brute sur la zone de travail, et
- une troisième fonction qui consiste à déposer la pièce traitée sur un autre posage ou convoyeur.

Dans ce qui suit, nous nous intéresserons à la deuxième fonction qui consiste à saisir une pièce traitée et déposer une pièce brute sur la zone de travail.

La dépose des pièces mécaniques sur la zone de travail et leur évacuation est une étape cruciale du processus de production de celles-ci. Cette opération se doit d'être fiable, précise et rapide pour ne pas impacter le rythme de production.

Les dispositifs 26 de préhension classiques comprennent deux moyens 27, 28 de préhension mobiles en translation et comportant une pince. Les bras sont mobiles en translation entre une position déployée dans laquelle la pince se situe à proximité de la zone de travail pour y déposer/récupérer une pièce mécanique et une position rétractée dans laquelle la pince est en attente.

En fonctionnement et en référence à la figure 11, lorsqu'une pièce mécanique vient de subir une opération mécanique sur la zone de travail, le processus de déchargement et de remplacement de la pièce traitée par une pièce brute comprend :
- une première étape dans laquelle un premier moyen de préhension, dit préhenseur 27 de déchargement, est descendu en position déployée en direction de la zone de travail et une pince 30 de déchargement saisi la pièce traitée ; au cours de cette étape un second moyen de préhension, dit préhenseur 28 de chargement, est immobile en position rétractée et maintient une pièce brute en attente avec une pince 31 de chargement,
- une deuxième étape dans laquelle le préhenseur 27 de déchargement est remonté en position rétractée avec la pièce traitée ; dans cette étape le préhenseur 28 de chargement est toujours immobile en position rétractée,
- une troisième étape dans laquelle le préhenseur 28 de chargement est descendu en position déployée et dépose la pièce brute sur la zone de travail ; dans cette étape le préhenseur 27 de déchargement est immobile en position rétractée avec la pièce traitée,
- une quatrième étape dans laquelle le préhenseur 28 de chargement est remonté en position rétractée sans pièce.

Bien que ce dispositif de préhension permet de saisir et déposer des pièces mécaniques, il n'est pour autant pas dénué d'inconvénients.

A chacune des étapes du processus d'évacuation et de remplacement, l'un des bras est immobile, ce qui augmente la durée de la prise/dépose des pièces mécaniques. Ces dispositifs de préhension classiques sont dits à mouvements alternatifs. Ceci grève le rendement des lignes de production au détriment de leur efficacité globale. La production de pièces mécaniques s'en trouve alors significativement impactée.

Afin de maintenir une cadence de production suffisante, les industriels utilisent plusieurs stations de travail fonctionnant en parallèle.

Les industriels souhaitent réduire la durée de la prise/dépose des pièces mécaniques afin de diminuer le nombre de stations de travails fonctionnant en parallèle. De la sorte, les industriels pourront réduire leurs coûts et leur impact sur l'environnement sans modifier les cadences de production.

A cet effet, les industriels ont tenté d'améliorer ces dispositifs de préhension à mouvements alternatifs.

En raison de la petite surface de la zone de travail, la trajectoire du bras de chargement et celle du bras de déchargement se croisent. Afin d'éviter une collision entre les bras et/ou les préhenseurs qui engendrerait leur destruction, il est préférable de débuter le mouvement de l'un qu'une fois que l'autre est immobile et dégagé.

Des tentatives ont consisté à synchroniser le bras de chargement et le bras de déchargement pour réduire, voire éliminer les temps d'attente des bras.

Ces tentatives sont restées vaines, les industriels se heurtant à d'importantes difficultés techniques.

Un autre inconvénient de ces dispositifs de préhension est qu'ils sont pilotés par des actionneurs distincts pour chaque préhenseur 27, 28. Ces dispositifs de préhension sont particulièrement énergivores à cadence industrielle et ont par conséquent un impact significatif sur l'environnement. Par ailleurs, les investissements initiaux sont élevés, notamment en raison de la nécessaire acquisition de plusieurs actionneurs et de leur système de pilotage dédié pour faire fonctionner ces dispositifs de préhension classiques.

### Résumé de l'invention

A cet effet, il est proposé en premier lieu un dispositif de préhension comprenant :
- un support muni d'un premier moyen de guidage,
- une bielle rotative montée mobile en rotation sur le support, et
- une pluralité de moyens de préhension montés mobiles en rotation sur la bielle rotative,
lesdits moyens de préhension comportant chacun un deuxième moyen de guidage apte à coopérer avec le premier moyen de guidage de sorte que les moyens de préhension se déplacent selon un parcours défini par le premier moyen de guidage.

Ce dispositif de préhension permet avantageusement de réduire la durée de la prise/dépose des pièces mécaniques. De plus, un seul actionneur est nécessaire pour mettre en mouvement la bielle rotative, de sorte que le dispositif de préhension est moins énergivore en fonctionnement à cadence industrielle.

Diverses caractéristiques supplémentaires peuvent être prévues seules ou en combinaison :
- les moyens de préhension peuvent être agencés à chaque extrémité de la bielle rotative ;
- la bielle rotative peut etre montée sur le support au moyen d'un pivot central, et chaque moyen de préhension peut etre monté sur la bielle rotative au moyen d'un pivot d'extrémité, chaque pivot d'extrémité se situant à une distance donnée du pivot central, les distances auxquelles se trouvent les pivots d'extrémité étant sensiblement égales ;
- chaque moyen de préhension comporte :
   - une pince activable entre une position fermée et une position ouverte,
   - un patin mobile sur lequel est monté la pince, ledit patin mobile étant monté mobile en rotation sur la bielle rotative et comportant en outre le deuxième moyen de guidage, ledit patin mobile assurant un contact glissant avec le support ;
- la bielle rotative est apte à se déplacer selon un sens horaire et selon un sens anti-horaire ;
- la bielle rotative se déplace entre :
   - une première position dans laquelle un premier préhenseur est en position basse et un second préhenseur est en position haute, et
   - une deuxième position dans laquelle le premier préhenseur est en position haute et le deuxième préhenseur est en position basse ;
- le mouvement des moyens de préhension est systématiquement simultané ;
- le dispositif de préhension comprend un canal de guidage constituant le premier moyen de guidage ;
- le support comporte une rainure définissant un canal de guidage constituant le premier moyen de guidage ;
- le support présente un contour extérieur de guidage constituant le premier moyen de guidage ;
- chaque deuxième moyen de guidage comprend un galet mécanique coopérant avec le premier moyen de guidage.

Il est proposé en deuxième lieu un système de préhension de pièces comprenant un dispositif de préhension tel que précédemment décrit, le système de préhension comprenant en outre :
- un actionneur rotatif apte à mettre en mouvement la bielle rotative selon un mouvement horaire et anti-horaire,
- un actionneur de préhension apte à fermer et ouvrir les moyens de préhension,
- un bras mobile apte à déplacer le dispositif de préhension,
- des moyens aptes à déterminer la position des moyens de préhension, et
- une unité de contrôle apte à recevoir des informations des moyens aptes à déterminer une position, et à envoyer des consignes aux actionneurs pour déplacer le dispositif de préhension et déposer/évacuer des pièces.

Il est proposé en troisième lieu un procédé de mise en œuvre d'un système de préhension tel que précédemment décrit, dans lequel celui-ci comprend :
- une première étape de déplacement du dispositif de préhension vers la zone de travail via le bras mobile, le deuxième moyen de préhension du dispositif de préhension détenant une pièce brute,
- une deuxième étape de mise en rotation de la bielle rotative, déplaçant simultanément les premier et deuxième moyens de préhension,
- une troisième étape de saisie de la pièce traitée,
- une quatrième étape de mise en rotation de la bielle rotative, déplaçant simultanément les premier et deuxième moyens de préhension,
- une cinquième étape de dépose de la pièce brute ;
- une sixième étape de déplacement du dispositif de préhension en dehors de la zone de travail via le bras mobile, le premier moyen de préhension détenant la pièce traitée.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig 1] la figure 1 est une vue en perspective d'un système de préhension comportant un dispositif de préhension selon un premier mode de réalisation de l'invention ;
[Fig 2] la figure 2 est une vue en perspective éclatée du dispositif de préhension de la figure 1 ;
[Fig 3] la figure 3 est une vue en coupe selon le plan de coupe III-III de la figure 1 ;
[Fig 4] la figure 4 est une vue en deux dimensions de face du dispositif de préhension des figures 1 à 3 lorsque les moyens de préhension sont dans une première position ;
[Fig 5] la figure 5 est une vue similaire à la figure 4, dans laquelle les moyens de préhension sont dans une deuxième position ;
[Fig 6] la figure 6 est une représentation schématique d'une trajectoire des galets mécaniques selon le premier mode de réalisation ;
[Fig 7] la figure 7 est une représentation schématique d'un support du dispositif de préhension, selon un deuxième mode de réalisation ;
[Fig 8] la figure 8 est une représentation schématique d'un support du dispositif de préhension, selon un troisième mode de réalisation ;
[Fig 9] la figure 9 est une représentation schématique d'une trajectoire des galets mécaniques selon les deuxième et troisième modes de réalisation ;

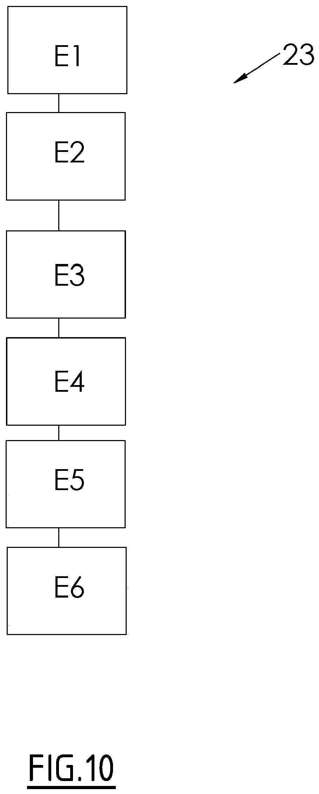

[Fig 10] la figure 10 est une représentation schématique d'un procédé de mise en œuvre selon l'invention ;
[Fig 11] la figure 11 est une représentation schématique d'un système de préhension connu dans l'état de la technique.

### Description détaillée de l'invention

Dans la suite de la description, des éléments présentant une structure identique ou des fonctions analogues seront désignés par des mêmes références.

Dans la suite de la description, on adoptera de manière non limitative - et sans référence à la gravité terrestre - des orientations longitudinale, transversale et verticale indiquées par le trièdre "X,Y,Z" des figures.

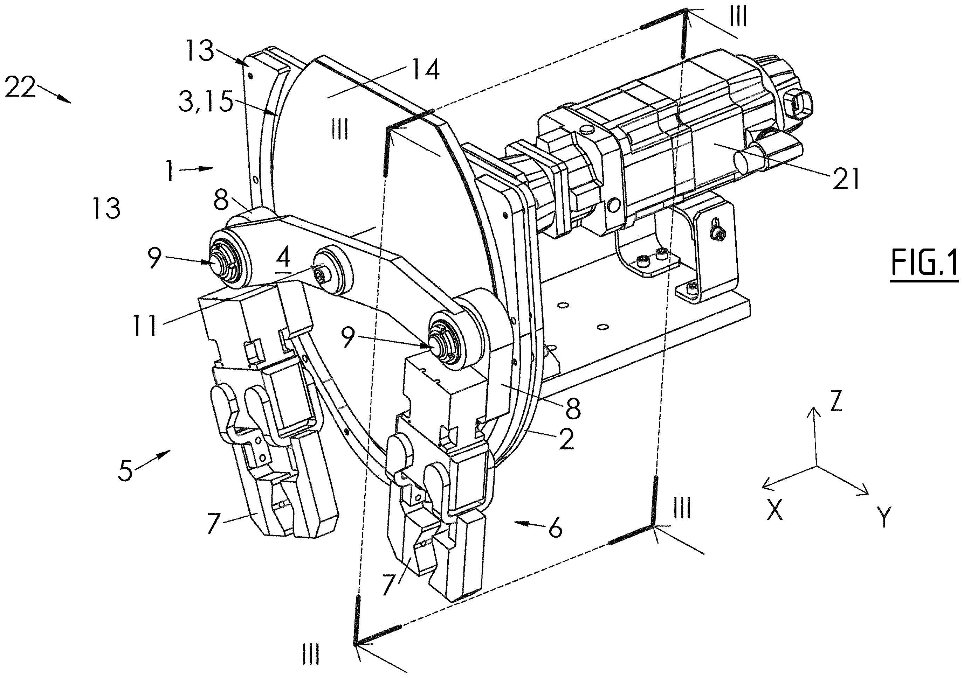

Sur la figure 1, est représenté un dispositif 1 de préhension. Le dispositif 1 de préhension comporte un support 2. Le support 2 se présente sous la forme d'une plaque faite d'un matériau résistant, de préférence métallique. Le support 2 est de forme sensiblement circulaire. Le support 2 peut adopter d'autres formes. Le support 2 est muni d'un premier moyen 3 de guidage. Le premier moyen 3 de guidage définit un parcours.

Le dispositif 1 de préhension comprend une bielle 4 rotative. La bielle 4 rotative est montée mobile en rotation sur le support 2.

Le dispositif 1 de préhension comprend en outre plusieurs préhenseurs 5, 6. Chaque préhenseur 5, 6 est monté mobile en rotation libre sur la bielle 4 rotative. Dans les modes de réalisation représentés sur les figures, le dispositif 1 de préhension comprend deux préhenseurs 5, 6, ainsi un premier préhenseur, dit préhenseur 5 de déchargement, est dédié à la saisie des pièces mécaniques traitées et à leur évacuation et un second préhenseur, dit préhenseur 6 de chargement, est dédié à la saisie et la dépose des pièces brutes. Chaque préhenseur 5, 6 comporte une pince 7 activable entre une position fermée dans laquelle celle-ci est apte à saisir une pièce mécanique et une position ouverte dans laquelle celle-ci est apte à relâcher une pièce mécanique. Chaque préhenseur 5, 6 comprend en outre un patin 8 support sur lequel est monté la pince 7. Le patin 8 support est monté mobile en rotation sur la bielle 4 rotative par le biais d'un pivot 9 d'extrémité.

Chaque préhenseur 5, 6 comprend un deuxième moyen 10 de guidage. Le deuxième moyen 10 de guidage coopère avec le premier moyen 3 de guidage permettant à chaque préhenseur 5, 6 de se déplacer le long du parcours que définit le premier moyen 3 de guidage.

Les préhenseurs 5, 6 sont agencés à chaque extrémité de la bielle 4 rotative. Un tel agencement permet aux préhenseurs 5, 6 de ne pas rentrer en collision l'un avec l'autre.

La bielle 4 rotative est une pièce rapportée et montée sur le support 2 au moyen d'un pivot 11 central. Ainsi que précédemment évoqué, chaque préhenseur 5, 6 est monté sur la bielle 4 rotative au moyen d'un pivot 9 d'extrémité. La combinaison d'une liaison pivot centrale et d'une liaison pivot d'extrémité permet avantageusement à chaque préhenseur 5, 6 de suivre une trajectoire complexe. Une trajectoire complexe est une trajectoire définie selon au moins deux axes. Dans le cas présent la trajectoire des préhenseurs 5, 6 comporte une composante transversale selon l'axe Y et une composante verticale selon l'axe Z.

Chaque pivot 9 d'extrémité se situe à une distance donnée du pivot 11 central et mesurée selon l'axe Y et Z. Ces distances sont sensiblement égales. Ceci permet d'obtenir une trajectoire identique pour chaque préhenseur 5, 6.

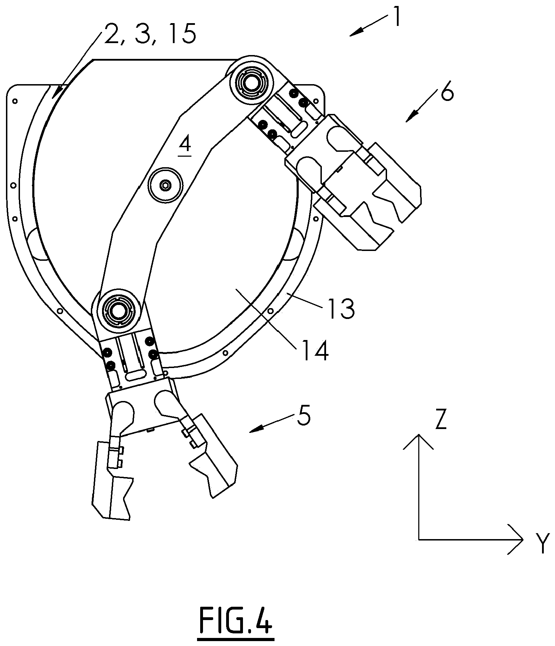

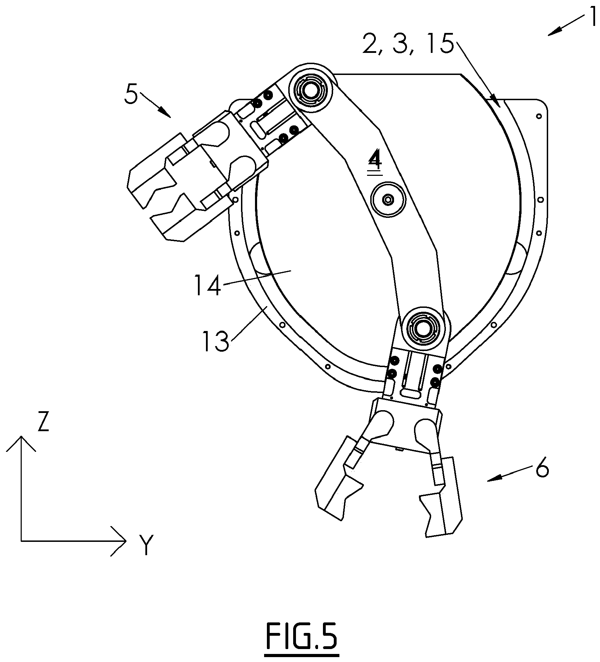

Ainsi qu'on peut le voir sur les figures 4 et 5, la bielle 4 rotative peut se déplacer selon le sens horaire, c'est-à-dire dans le sens des aiguilles d'une montre et selon le sens anti-horaire, c'est-à-dire le sens contraire des aiguilles d'une montre. Ceci permet avantageusement de conférer à la bielle 4 rotative un mouvement rappelant celui d'un pendule. Ceci permet avantageusement d'assurer un mouvement simultané des préhenseurs 5, 6.

La bielle 4 rotative se déplace entre une première position et une seconde position, illustrées respectivement sur les figures 4 et 5.

En référence à la figure 4, le préhenseur 5 de déchargement est en position basse pour saisir la pièce traitée (non représentée) sur la zone de travail (non représentée), le préhenseur 6 de chargement est en parallèle en position haute avec la pièce brute (non représentée). En référence à la figure 5, le préhenseur 5 de déchargement est en position haute avec la pièce traitée, et le préhenseur 6 de chargement est en position basse et dépose la pièce brute sur la zone de travail.

En raison du fait que le préhenseur 5 d'évacuation et le préhenseur 6 de dépose sont montés sur une seule et même bielle 4 rotative, le mouvement des préhenseurs 5, 6 est systématiquement simultané. Ceci permet de diminuer significativement la durée de la prise/dépose des pièces mécaniques, ce qui contribue à améliorer l'efficacité de la ligne de production.

Le second moyen 10 de guidage comporte un galet 12 mécanique, libre de rotation selon l'axe X. Le galet 12 mécanique coopère avec le premier moyen 3 de guidage. L'utilisation d'un galet 12 mécanique permet avantageusement de réduire les frottements entre les préhenseurs 5, 6 en mouvement et le support 2. Le guidage est amélioré, et ceci permet en outre de réduire la consommation énergétique. Le galet 12 mécanique permet en outre de réduire le bruit de fonctionnement du dispositif de préhension.

### 1^{er} Mode de réalisation

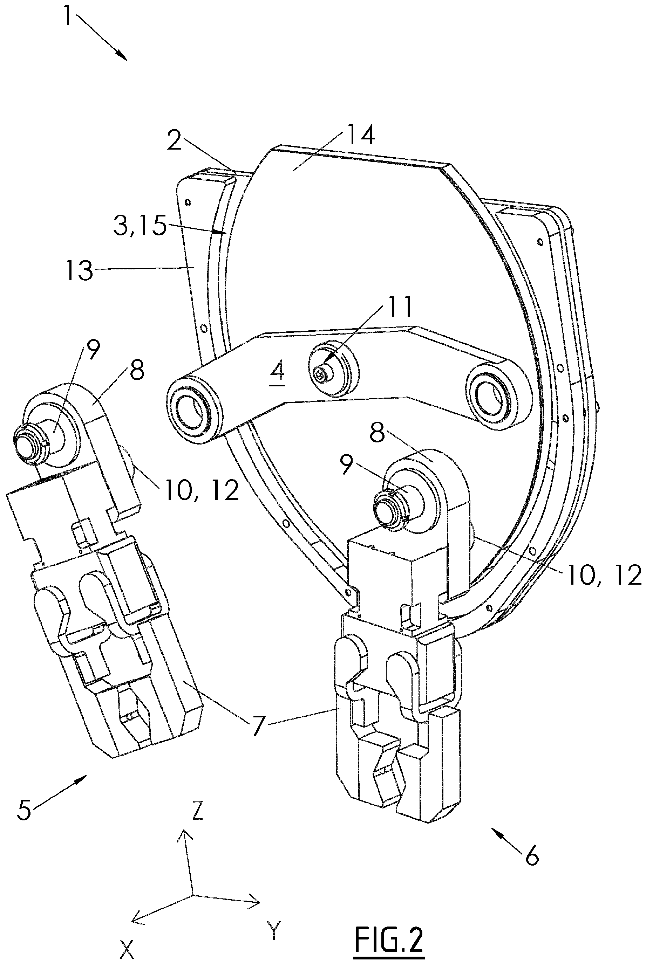

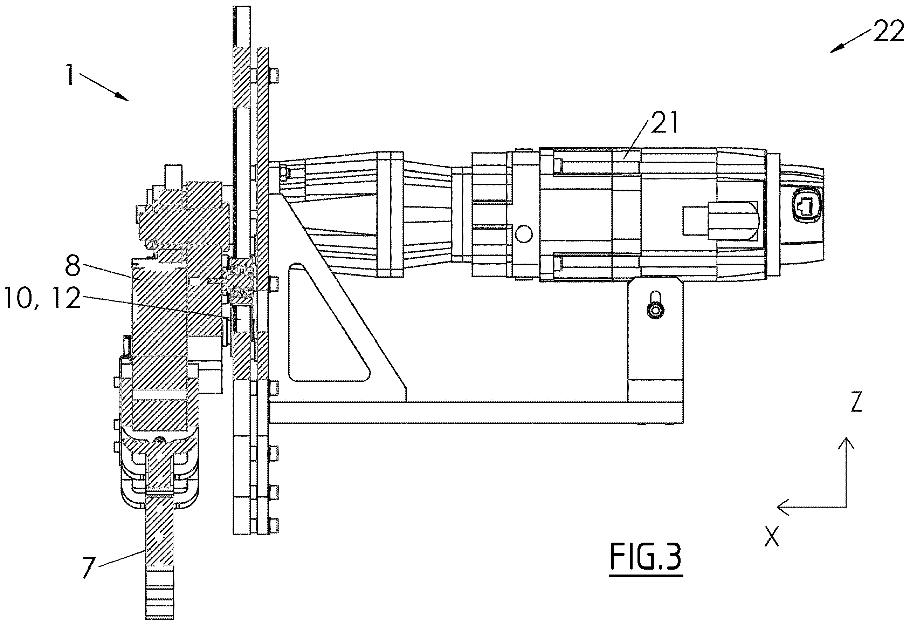

Selon un premier mode de réalisation représenté sur les figures 1 à 5, le dispositif 1 de préhension comporte un premier élément 13 rapporté et un deuxième élément 14 rapporté, et montés solidaires sur le support 2. Le premier élément 13 rapporté et le deuxième élément 14 rapporté sont agencés de sorte à définir ensembles un canal 15 de guidage. Le galet 12 mécanique est inséré dans le canal 15 de guidage. Dans ce mode de réalisation, le canal 15 de guidage définit une trajectoire 18 sensiblement circulaire.

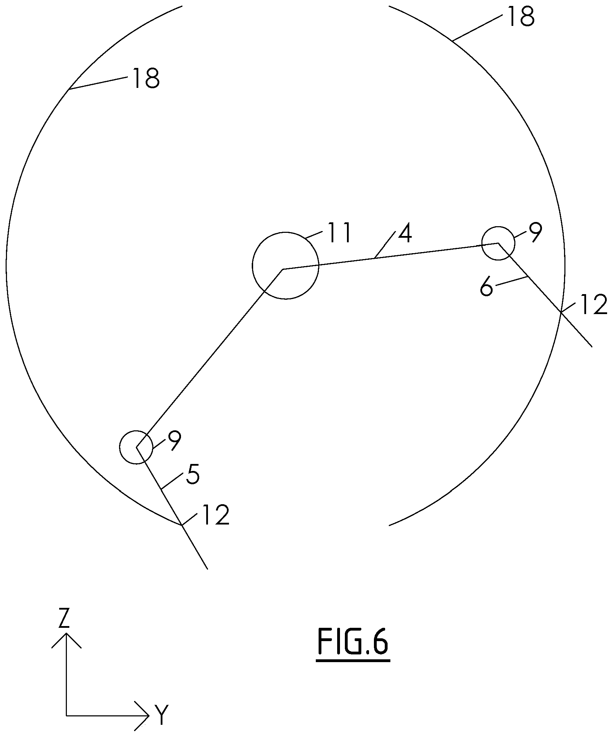

. Chaque galet 12 mécanique suit une trajectoire 18 illustrée sur la figure 6.

### 2^{ème} Mode de réalisation

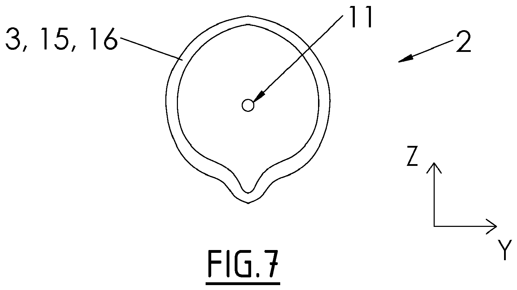

Selon un deuxième mode de réalisation représenté sur la figure 7, le dispositif 1 de préhension ne comprend pas d'éléments rapportés pour former le canal 15 de guidage. Le canal 15 de guidage est formé par une rainure 16 pratiquée dans le support 2. Le support 2 est alors une came. A l'instar du premier mode de réalisation, les galets 12 mécaniques sont insérés dans le canal 15 de guidage.

### 3^{ème} Mode de réalisation

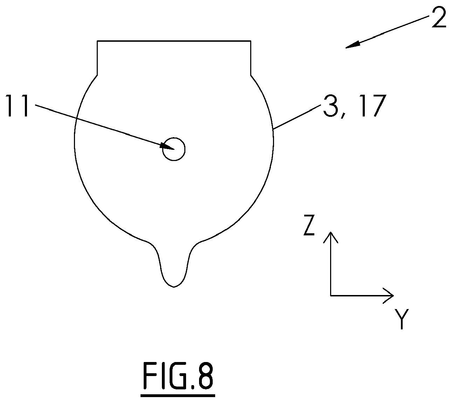

Selon un troisième mode de réalisation représenté sur la figure 8, le dispositif 1 de préhension ne comprend pas de canal 15 de guidage. Le guidage du galet 12 mécanique est réalisé grâce à un contour 17 extérieur du support 2. Ainsi le galet 12 mécanique coopère avec le contour 17 extérieur du support 2. Le contour 17 extérieur guide par conséquent le galet 12 mécanique. Le support 2 est alors une came. Dans ce mode de réalisation, le dispositif 1 de préhension comprend deux ressorts de rappel (non représentés). Chaque ressort de rappel est agencé de sorte à maintenir un galet 12 mécanique en contact avec le contour 17 extérieur du support 2.

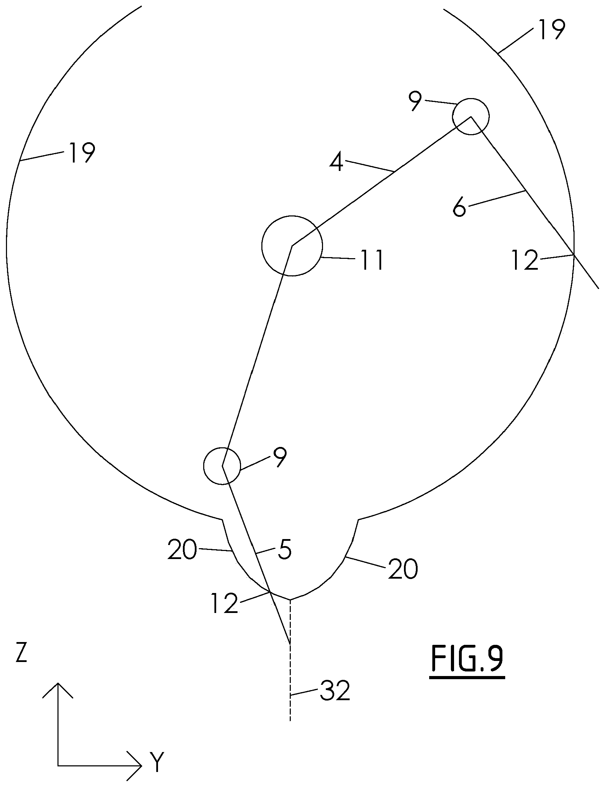

En ce qui concerne le deuxième et le troisième mode de réalisation, les galets 12 mécaniques suivent une trajectoire 18 représentée sur la figure 9. Le mouvement d'un galet 12 mécanique suit deux trajectoires distinctes: une trajectoire 19 d'approche et une trajectoire 20 de prise/dépose. La trajectoire 19 d'approche est sensiblement circulaire. A l'approche de la zone de travail, chaque préhenseur 5, 6 suit une trajectoire 20 de prise/dépose. La trajectoire 20 de prise/dépose est sensiblement elliptique. Il est entendu que ces trajectoires 19, 20 sont par ailleurs obtenues grâce au premier moyen 3 de guidage, que ce soit le canal 15 de guidage dans le deuxième mode de réalisation ou le contour 17 extérieur dans le troisième mode de réalisation, qui définissent un parcours sensiblement identique comme on peut le voir sur les figures 7 et 8. A noter que lorsque le galet 12 mécanique entre dans la trajectoire 20 de prise/dépose, la pièce mécanique suit une trajectoire 32 sensiblement parallèle à l'axe Z. Cette trajectoire 32 linéaire de la pièce mécanique est obtenue grâce à la forme du premier moyen 3 de guidage, rappelant celle d'une demi-ellipse, et à la position du deuxième moyen 10 de guidage situé dans ladite demi-ellipse.

Le dispositif 1 de préhension précédemment décrit est apte à être mis en œuvre dans un système de préhension. Le système de préhension comporte un actionneur 21 rotatif. L'actionneur 21 rotatif est apte à mettre en mouvement la bielle 4 rotative selon un mouvement horaire et anti-horaire alternatif. L'actionneur 21 rotatif est par exemple un moteur 21 électrique dans lequel on inverse la polarisation afin de modifier le sens de rotation de celui-ci. Toute autre moyen permettant d'obtenir un tel mouvement alternatif pourra être utilisé.

Le système de préhension comprend en outre un bras mobile apte à déplacer le dispositif de préhension. Selon un autre mode de réalisation, le système de préhension ne comprend pas de bras mobile, et le dispositif de préhension est fixe au-dessus de la zone de travail.

Le système de préhension comprend en outre deux actionneurs de préhension (non représentés) aptes à fermer et ouvrir les pinces 7.

Le système de préhension est muni d'au moins un moyen apte à détecter la position des préhenseurs en position basse et/ou en position haute. Par exemple, il peut s'agir d'un détecteur (non représenté), de préférence optique.

Le système de préhension comprend une unité de contrôle (non représentée) informatique apte à recevoir diverses informations, notamment sur la position des préhenseurs 5, 6, et apte à coordonner le mouvement des pinces 7 et de la bielle 4 rotative en contrôlant les différents actionneurs.

Le détecteur est agencé de sorte à pouvoir détecter la présence d'un préhenseur 5, 6 en position basse et/ou en position haute. Ceci permet d'indiquer à l'unité de contrôle lorsque l'un des préhenseur 5, 6 est en position basse et/ou en position haute, ce qui permet à l'unité de contrôle d'envoyer une consigne d'ouverture ou de fermeture à l'actionneur de préhension pour ouvrir et/ou fermer les pinces 7.

Dans ce qui suit il sera décrit un procédé de mise en œuvre du système de préhension précédemment décrit. Il s'agit d'un procédé permettant l'évacuation d'une pièce traitée et la dépose d'une pièce brute.

En partant du préalable selon lequel la zone de travail comporte une pièce traitée, un préhenseur de chargement détenant une pièce brute et un préhenseur de déchargement vide. Le procédé d'évacuation et de dépose comprend :
- une première étape E1 de déplacement du dispositif de préhension vers la zone de travail via le bras mobile, le deuxième moyen 6 de préhension du dispositif 1 de préhension détenant une pièce brute,
- une deuxième étape E2 de mise en rotation de la bielle 4 rotative, déplaçant simultanément les premier et deuxième moyens 5, 6 de préhension,
- une troisième étape E3 de saisie de la pièce traitée,
- une quatrième étape E4 de mise en rotation de la bielle 4 rotative, déplaçant simultanément les premier et deuxième 5, 6 moyens de préhension,
- une cinquième étape E5 de dépose de la pièce brute ;
- une sixième étape E6 de déplacement du dispositif de préhension en dehors de la zone de travail via le bras mobile, le premier moyen 5 de préhension détenant la pièce traitée.

La troisième étape comporte deux sous étapes :
- arrêt E31 de l'actionneur 21 lorsque le préhenseur de déchargement est en position basse,
- fermeture E32 de la pince du préhenseur de déchargement pour saisir la pièce traitée.

La cinquième étape comporte trois sous étapes :
- arrêt E51 de l'actionneur 21 lorsque le préhenseur de chargement est en position basse,
- ouverture E52 de la pince du préhenseur de chargement pour déposer la pièce brute,
- retour E53 en position neutre des préhenseurs de chargement et de déchargement tel que représenté sur la figure 1.

Le dispositif de préhension est ensuite déplacé vers un posage ou convoyeur d'évacuation (non représenté) par un bras mobile pour évacuer la pièce traitée.

Le dispositif 1 de préhension qui vient d'être décrit est particulièrement avantageux car il permet de réduire significativement la durée de l'évacuation des pièces traitées et des pièces brutes. Cette durée peut être divisée par deux, voire par 3, en fonction de la vitesse de rotation de la bielle 4 rotative.

En outre l'utilisation d'un moteur 21 électrique pour mettre en rotation la bielle 4 rotative permet de diminuer la consommation énergétique du dispositif 1 de préhension réduisant de ce fait l'impact sur l'environnement. La consommation d'air est également réduite.

## Revendications

1. Dispositif (1) de préhension comprenant :
- un support (2) muni d'un premier moyen (3) de guidage,
- une bielle (4) rotative montée mobile en rotation sur le support (2), et
- une pluralité de moyens (5, 6) de préhension montés mobiles en rotation sur la bielle (4) rotative,
lesdits moyens (5, 6) de préhension comportant chacun un deuxième moyen (10) de guidage apte à coopérer avec le premier moyen (3) de guidage de sorte que les moyens (5, 6) de préhension se déplacent selon un parcours défini par le premier moyen (3) de guidage.

2. Dispositif (1) de préhension selon la revendication 1, dans lequel les moyens (5, 6) de préhension sont agencés à chaque extrémité de la bielle (4) rotative.

3. Dispositif (1) de préhension selon l'une quelconque des revendications précédentes, dans lequel la bielle (4) rotative est montée sur le support (2) au moyen d'un pivot (11) central, et chaque moyen (5, 6) de préhension est monté sur la bielle (4) rotative au moyen d'un pivot (9) d'extrémité, chaque pivot (9) d'extrémité se situant à une distance donnée du pivot (11) central, les distances auxquelles se trouvent les pivots (9) d'extrémité étant sensiblement égales.

4. Dispositif (1) de préhension selon l'une quelconque des revendications 2 ou 3, dans lequel chaque moyen (5, 6) de préhension comporte :
- une pince (7) activable entre une position fermée et une position ouverte,
- un patin mobile (8) sur lequel est monté la pince (7), ledit patin mobile (8) étant monté mobile en rotation sur la bielle (4) rotative et comportant en outre le deuxième moyen de guidage, ledit patin mobile (8) assurant un contact glissant avec le support (2).

5. Dispositif (1) de préhension selon l'une quelconque des revendications précédentes, dans lequel la bielle (4) rotative est apte à se déplacer selon un sens horaire et selon un sens anti-horaire.

6. Dispositif (1) de préhension selon la revendication 5, dans lequel la bielle (4) rotative se déplace entre :
- une première position dans laquelle un premier préhenseur (5) est en position basse et un second préhenseur (6) est en position haute, et
- une deuxième position dans laquelle le premier préhenseur (5) est en position haute et le deuxième préhenseur (6) est en position basse.

7. Dispositif (1) de préhension selon l'une quelconque des revendications précédentes, dans lequel le mouvement des moyens de préhension (5, 6) est systématiquement simultané.

8. Dispositif (1) de préhension selon l'une quelconque des revendications 1 à 7, dans lequel celui-ci comprend un canal (15) de guidage constituant le premier moyen (3) de guidage.

9. Dispositif (1) de préhension selon l'une quelconque des revendications 1 à 7, dans lequel le support (2) comporte une rainure (16) définissant un canal (15) de guidage constituant le premier moyen (3) de guidage.

10. Dispositif (1) de préhension selon l'une quelconque des revendications 1 à 7, dans lequel le support (2) présente un contour (17) extérieur de guidage constituant le premier moyen (3) de guidage.

11. Dispositif (1) de préhension selon l'une quelconque des revendications précédentes, dans lequel chaque deuxième moyen (10) de guidage comprend un galet (12) mécanique coopérant avec le premier moyen (3) de guidage.

12. Système (22) de préhension de pièces comprenant un dispositif (1) de préhension selon l'une quelconque des revendications 1 à 11, le système de préhension comprenant en outre :
- un actionneur (21) rotatif apte à mettre en mouvement la bielle (4) rotative selon un mouvement horaire et anti-horaire,
- un actionneur de préhension apte à fermer et ouvrir les moyens (5, 6) de préhension,
- un bras mobile apte à déplacer le dispositif (1) de préhension,
- des moyens aptes à déterminer la position des moyens (5, 6) de préhension, et
- une unité de contrôle apte à recevoir des informations des moyens aptes à déterminer une position, et à envoyer des consignes aux actionneurs pour déplacer le dispositif de préhension et déposer/évacuer des pièces.

13. Procédé (23) de mise en œuvre d'un système (22) de préhension selon la revendication 12, dans lequel celui-ci comprend :
- une première étape (E1) de déplacement du dispositif de préhension vers la zone de travail via le bras mobile, le deuxième moyen (6) de préhension détenant une pièce brute,
- une deuxième étape (E2) de mise en rotation de la bielle (4) rotative dans un premier sens, déplaçant simultanément les premier et deuxième moyens (5, 6) de préhension, le premier moyen de préhension étant au voisinage de la zone de travail,
- une troisième étape (E3) de saisie d'une pièce traitée dans la zone de travail par le premier moyen de préhension (5),
- une quatrième étape (E4) de mise en rotation de la bielle (4) rotative, déplaçant simultanément les premier et deuxième (5, 6) moyens de préhension dans un deuxième sens inverse au premier sens, la pièce traitée étant évacuée et la pièce brute étant approchée de la zone de travail,
- une cinquième étape (E5) de dépose de la pièce brute dans la zone de travail;
- une sixième étape (E6) de déplacement du dispositif de préhension en dehors de la zone de travail via le bras mobile, le premier moyen (5) de préhension détenant la pièce traitée.
